# EUROPÄISCHE PATENTSCHRIFT

(11) **EP 0 998 508 B1**
(45) Veröffentlichungstag und Bekanntmachung des Hinweises auf die Patenterteilung: **02.10.2002**
(21) Anmeldenummer: 98940238.3
(22) Anmeldetag: 16.07.1998
(51) Int. Cl.: C08G 18/74, C08G 18/77, C08G 18/40, C08G 18/10

(54) **BESCHICHTUNGSMITTEL UND VERFAHREN ZU DESSEN HERSTELLUNG**
COATING AGENT AND METHOD FOR PRODUCING SAME
AGENT DE RECOUVREMENT ET PROCEDE PERMETTANT DE LE PREPARER

(30) Priorität: 22.07.1997 DE 19731384
(43) Veröffentlichungstag der Anmeldung: 10.05.2000
(73) Patentinhaber: BASF Coatings AG, 48165 Münster (DE)
(72) Erfinder: BAUMGART, Hubert, D-48163 Münster (DE); RINK, Heinz-Peter, D-48153 Münster (DE); BRUCHMANN, Bernd, D-67251 Freinsheim (DE); BARTOL, Fritz, D-59071 Hamm (DE); MOHRHARDT, Günther, D-16734 Speyer (DE)
(74) Vertreter: Fitzner, Uwe, Dr.
(86) Internationale Anmeldenummer: EP9804438
(87) Internationale Veröffentlichungsnummer: WO99005194

(56) Entgegenhaltungen:
- EP-A1- 0 475 012
- EP-A1- 0 540 985
- EP-A1- 0 600 310
- EP-A2- 0 752 433
- WO-A1-97/23536

## Beschreibung

Die vorliegende Erfindung betrifft ein Zweikomponenten-Beschichtungsmittel (2K-system), welches (I) mindestens ein Isocyanat als Vernetzungsmittel und (II) mindestens ein Bindemittel mit funktionellen Gruppen, welche mit Isocyanaten reagieren, enthält, sowie dessen Verwendung.

### Stand der Technik

Unter Zweikomponenten-Beschichtungsmittel - kurz 2K-Systeme genannt - wird ein Gebinde aus zwei verschiedenen, separat hergestellten und gelagerten Lackkomponenten verstanden, die jedoch stets in Verbindung miteinander gehandelt werden und die von einem Anwender, welcher aus einem Beschichtungsmittel einen Überzug fertigen will, vor der Herstellung des Überzuges zu dem Beschichtungsmittel gemischt werden. Solche 2K-Systeme sind u.a. zur Herstellung von Decklacken gebräuchlich. Unter dem Begriff Decklacke werden hierbei Lacke verstanden, die zur Herstellung der obersten Lackschicht verwendet werden. Die oberste Lackschicht kann dabei einschichtig oder mehrschichtig, insbesondere zweischichtig, sein. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht. Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt mit einem Klarlack überlackiert und anschließend Basislackschicht und Klarlackschicht zusammen gehärtet werden. Dieses Verfahren ist ökonomisch sehr vorteilhaft, stellt aber hohe Anforderungen an den Basislack und den Klarlack. Der auf den noch nicht gehärteten Basislack applizierte Klarlack darf die Basislackschicht nicht anlösen oder sonstwie stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes, oder Perlglanzpigmente) enthalten, eingesetzt werden.

2K-Systeme, die vorwiegend für die Lackierung von Automobilen Verwendung finden, bestehen üblicherweise aus hydroxyfunktionellen Polyacrylaten und/oder Polyestern sowie freien Isocyanat-Trimeren des Hexamethylendiisocyanats oder des Isophorondiisocyanats (vgl. z.B . die Patentschriften DE-4432260; DE-4432985). Ebenso werden auch die Monomere der beiden genannten Verbindungen mit blockierten Isocyanatgruppen verwendet (. z.B . in der Patentschrift EP-0475012). Neben Isophorondiisocyanat ist aus EP-0600310 und WO-9723536 die Verwendung anderer Diisocyanate mit Ringstrukturen bekannt. Diese Systeme haben jedoch verschiedene gravierende Nachteile. Insbesondere weisen Lacke mit guter Säurebeständigkeit nur eine mäßige Kratzbeständigkeit auf. Umgekehrt ist bei ausreichender Kratzbeständigkeit die Säurebeständigkeit ungenügend.

### Gegenstand der Erfindung

Der vorliegenden Erfindung liegt somit die Aufgabe zugrunde, ein 2K-System zur Verfügung zu stellen, das in seiner Komponente (I) mindestens ein Isocyanat als Vernetzungsmittel und in seiner Komponente (II) mindestens ein Bindemittel mit funktionellen Gruppen, welche mit Isocyanaten reagieren, enthält und die oben genannten Nachteile nicht mehr länger aufweist, sondern insbesondere eine gute Kratzbeständigkeit mit gleichzeitig guter Säurebeständigkeit hat.

Diese Aufgabe wird erfindungsgemäß dadurch gelöst, daß die Komponente (I)
Ia) zumindest ein Isocyanat mit mindestens einer Diisocyanat-Struktureinheit enthält, welche
   iii) im Falle einer nicht aromatischen Ringstruktur
      α) beide Isocyanatgruppen über lineares C₁-C₉-Alkyl und/oder lineares C₂-C₁₀-Etheralkyl oder
      β) eine Isocyanatgruppe direkt und die andere über lineares C₂-C₉-Alkyl und/oder lineares C₂-C₁₀-Etheralkyl und
   iv) im Fall einer ungesättigten aromatischen Ringstruktur mindestens eine der beiden Isocyanatgruppen über lineares C₂-C₉-Alkyl und/oder lineares C₂-C₁₀-Etheralkyl, welche beiden Reste keine benzylischen Wasserstoffatome aufweisen, mit der Ringstruktur verbunden ist oder sind;
   und/oder
Ib) zumindest ein Oligomer dieses Isocyanats la) mit 2 bis 10 Isocyanateinheiten, insbesondere ein Trimer;
   und/oder
Ic) zumindest ein partiell blockiertes Isocyanat la) und/oder ein partiell blockiertes Oligomer Ib), insbesondere ein Trimer Ib);
enthält.

### Komponente (I)

Der wesentliche Bestandteil der erfindungsgemäßen Komponente (i) ist mindestens ein erfindungsgemäß zu verwendendes Isocyanat Ia). Dieses weist mindestens eine Diisocyanat-Struktureinheit mit einer speziellen Struktur auf.

Zwar kann das erfindungsgemäß zu verwendende Isocyanat Ia) zwei oder mehr dieser Diisocyanat-Struktureinheiten aufweisen, indes hat es sich bewährt, nur eine zu verwenden.

Die Diisocyanat-Struktureinheit weist folgende erfindungsgemäße Merkmale auf:
i) Eine ungesättigte bzw. aromatische oder eine nicht aromatische Ringstruktur mit 5 - 10 Ringatomen und
ii) zwei an die Ringstruktur gebundene Isocyanatgruppen,
   wobei
iii) im Falle einer nicht aromatischen Ringstruktur
   α) beide Isocyanatgruppen über lineares C₁-C₉-Alkyl und/oder lineares C₂-C₁₀-Etheralkyl oder
   β) eine Isocyanatgruppe direkt und die andere Isocyanatgruppe über lineares C₂-C₉-Alkyl und/oder lineares C₂-C₁₀-Etheralkyl
   und
iv) im Fall einer ungesättigten oder aromatischen Ringstruktur mindestens eine der beiden Isocyanatgruppen über lineares C₂-C₉-Alkyl oder lineares C₂-C₁₀-Etheralkyl, welch beiden Reste keine benzylischen Wasserstoffatome aufweisen,
mit der Ringstruktur verbunden ist oder sind.

Bezüglich der Diisocyanat-Struktureinheit des erfindungsgemäß zu verwendenden Diisocyanats Ia) bestehen verschiedene Möglichkeiten der weiteren Ausbildung, die folgend beschrieben werden.

Hinsichtlich der Ringstruktur ist es grundsätzlich möglich, daß es sich um Heteroringe handelt. Dann enthält die Ringstruktur neben C-Atomen als Ringatome auch davon verschiedene Ringatome, wie beispielsweise N-Atome, O-Atome oder Si-Atome. Hierbei kann es sich um gesättigte oder ungesättigte bzw. aromatische Heteroringe handeln. Beispiele geeigneter gesättigter Heteroringe sind die Silacyclopentan-, Silacyclohexan-, Oxolan-, Oxan-, Dioxan-, Morpholin-, Pyrrolidin-, Imidazolidin-, Pyrazolidin-, Piperidin- oder Chinuklidinringe. Beispiele geeigneter ungesättigter bzw. aromatischer Heteroringe sind Pyrrol-, Imidazol-, Pyrazol-, Pyridin-, Pyrimidin-, Pyrazin-, Pyridazin- oder Triazinringe. Bevorzugt ist es, wenn die Ringstruktur als Ringatome ausschließlich C-Atome enthält.

Die Ringstruktur kann einerseits brückenfrei sein. In dem Fall, daß die Ringstruktur ein bicyclisches Terpen-Grundgerüst, Decalin, Adamantan oder Chinuklidin ist, können jedoch Brücken enthalten sein. Beispiele geeigneter Terpen-Grundgerüste sind Caran-, Norcaran-, Pinan-, Camphan- oder Norbonan-Grundgerüste.

Die Wasserstoffatome einer Diisocyanat-Struktureinheit, insbesondere der Ringstruktur, können durch Gruppen oder Atome substituiert sein, welche weder mit Isocyanaten noch mit der nachstehend beschriebenen Komponente (II) reagieren. Beispiele geeigneter Gruppen sind Nitro-, Alkyl-, Cycloalkyl-, Perfluoralkyl-, Perfluorcycloalkyl- oder Arylgruppen. Beispiele geeigneter Atome sind Halogenatome, insbesondere Fluor.

Vorteilhafterweise besteht die Ringstruktur aus 6 C-Atomen, insbesondere in Form von Cyclohexan oder Benzol.

Beispiele für geeignetes lineares C₁-C₉-Alkyl sind Methylen- oder Ethylensowie Tri, Tetra-, Penta-, Hexa-, Hepta-, Octa- oder Nonamethylenreste, insbesondere Methylenreste.

Die linearen C₂-C₁₀-Etheralkyle sind entweder über die Sauerstoffatome oder über die darin enthaltenen Alkandiylreste mit der Ringstruktur verbunden. Vorzugsweise sind sie über die Sauerstoffatome hiermit verbunden. Die Indices 2 bis 10 bedeuten, daß 2 bis 10 C-Atome in den Etheralkylen enthalten sind.

Die Etheralkyle können nur 1 Sauerstoffatom enthalten. Erfindungsgemäß ist es von Vorteil, wenn 2 bis 10, insbesondere 2 bis 5 Sauerstoffatome in der Kette vorhanden ist. Dann befinden sich 1 oder mehr, insbesondere aber 2, C-Atome zwischen 2 Sauerstoffatomen.

Beispiele geeigneter C₂-C₁₀-Etheralkyle sind
-(O-CH₂)ₘ-, worin m = 1 bis 10,
-(O-C₂H4)ₚ-, worin p = 1 bis 5,
-(O-C₃H6)_{q}-, worin q = 1 bis 3 oder
-(O-C₄H₈)ᵣ-, worin r = 1 bis 2.

Wenn das erfindungsgemäß zu verwendende Isocyanat Ia) zumindest eine Diisocyanat-Struktureinheit mit einem nicht aromatischen Ringsystem, insbesondere Cyclohexan, enthält, können beide Isocyanatgruppen über -CH₂-, vorzugsweise an die Positionen 1 und 3 des Ringsystems gebunden sein. Es ist aber auch eine Bindung an die Positionen 1,2 und 1,4 möglich. Die Diisocyanat-Struktureinheit bzw. das erfindungsgemäß zu verwendende lsocyanat Ia) hat dann beispielsweise die Formel C₆H₈(-CH₂-NCO)₂.

Es ist aber auch möglich, daß eine der beiden Isocyanatgruppen unmittelbar an ein Ringatom eines nicht aromatischen Ringsystems, insbesondere Cyclohexan, gebunden ist und daß die zweite Isocyanatgruppe über C₂-C₉-Alkyl, insbesondere C₃- Alkyl an eine weiteres Ringatom, vorzugsweise in 1,2-Konfiguration, gebunden ist. Die Diisocyanat-Struktureinheit bzw. das erfindungsgemäß zu verwendende Isocyanat Ia) hat dann beispielsweise die Formel C₆H₈(-NCO)(-C₃H₆-NCO)

Wenn das erfindungsgemäß zu verwendende Isocyanat la) zumindest eine Diisocyanat-Struktureinheit mit einem ungesättigten oderaromatischen Ringsystem, insbesondere Benzol, enthält, können beide Isocyanatgruppen über C₂-C₉-Alkyl hiermit verbunden sein. Erfindungswesentlich ist, daß die Alkandiylreste keine benzylischen Wasserstoffatome enthalten, sondern an deren Stelle Substituenten R¹ und R² tragen, welche weder mit Isocyanaten noch mit der Komponte (II) reagieren. Beispiele geeigneter Substituenten R¹ und R² sind C₁-C₁₀-Alkyl, Aryl- oder Halogen, vorzugsweise -CH₃.

Beispiele geeigneter Alkandiylgruppen sind demnach -CR¹R²-(CH₂)ₙ-, worin n = 1 bis 8, insbesondere 1 bis 4, und R¹ und R² = die vorstehend angegebenen Substituenten.

Die vorstehend beschriebenen Alkandiylgruppen sind vorzugsweise an die Positionen 1 und 3 des Benzolrings gebunden. Es ist indes auch in diesem Fall eine Bindung an die Positionen 1,2 und 1,4 möglich. Die Diisocyanat-Struktureinheit bzw. das erfindungsgemäß zu verwendende Isocyanat Ia) hat dann beispielsweise die Formel C₆H₄(-C(CH₃)₂-C₂H₄-NCO)₂.

Die beiden Isocyanatgruppen können indes auch über die vorstehend beschriebenen C₂-C₁₀-Etheralkyle mit dem ungesättigten oder aromatischen Ringsystem, insbesondere Benzol, verbunden sein. Erfindungsgemäß ist es wesentlich, daß die Etheralkyle keine benzylischen Wasserstoffatome tragen. Dies kann im Falle, daß die Etheralkyle über C-Atome mit dem aromatischen Ringsystem verknüpft sind, dadurch erreicht werden, daß die benzylischen C-Atome die vorstehend beschriebenen Substituenten R¹ und R² tragen. Wenn die Etheralkyle über Sauerstoffatome mit dem aromatischen Ringsystem verknüpft sind, sind keine benzylischen Wasserstoffatome vorhanden, weswegen diese Variante bevorzugt wird.

Es ist auch hier möglich, daß eine der beiden Isocyanatgruppen unmittelbar an ein Ringatom eines ungesättigten oder aromatischen Ringsystems, vorzugsweise eines Benzolrings, gebunden ist und daß die zweite Isocyanatgruppe beispielsweise über C₃-C₉-Alkyl, welches keine benzylischen Wasserstoffatome aufweist, an eine weiteres Ringatom, vorzugsweise in 1,2-Konfiguration, gebunden ist. Die Diisocanat-Struktureinheit bzw. das erfindungsgemäß zu verwendende Isocyanat Ia) hat dann beispielweise die Formel C₆H₄(-NCO)(-C(CH₃)₂-(CH₂)₂-NCO).

Mindestens eines der vorstehend im Detail beschriebenen erfindungsgemäß zu verwendenden Isocyanate Ia) kann als solches als Vernetzungsmittel in der erfindungsgemäßen Komponente (I) verwendet werden.

Anstelle des Isocyanats Ia) oder zusätzlich zu diesem kann mindestens ein Oligomer Ib) als Vernetzungsmittel in der erfindungsgemäßen Komponente (I) verwendet werden. Das Oligomer Ib) wird hergestellt aus dem Isocyanat la), wobei vorteilhafterweise 2-10 Monomereinheiten umgesetzt werden und wobei die Trimerisierung besonders bevorzugt wird. Die Oligomerisierung und Trimersierung kann mit Hilfe üblicher und bekannter geeigneter Katalysatoren zur Bildung von Uretdion-, Biuret-, Isocyanurat-, Harnstoff und/oder Allophanatgruppen rühren. Eine Oligomerisierung ist aber auch möglich durch Umsetzung mit niedermolekularen Polyolen wie Trimethylolpropan oder Homotrimethylolpropan, Glycerin, Neopentylglykol, Dimethylolcyclohexan, Ethylenglykol, Diethylenglykol, Propylenglykol, 2-Methyl-2-propylpropandiol-1,3, 2-Ethyl-2-butylpropandiol-1, 3,2,2,4-Trimethylpentandiol-1,5 und 2,2,5-Trimethylhexandiol-1,6, die, sofern erforderlich, ggf. partiell ethoxyliert und/oder propoxyliert oder anderweitig hydrophiliert sind.

Anstelle des Isocyanats la) und/oder des Oligomeren Ib) oder zusätzlich zu diesen beiden können mindestens ein partiell blockiertes Isocyanat Ia) und/oder mindestens ein partiell blockiertes Oligomer Ib) als Vernetzungsmittel Ic) in der erfindungsgemäßen Komponente (I) verwendet werden. Beispiele geeigneter Blockierungsmittel sind die aus der US-Patentschrift 4,444,954 bekannten Blockierungsmittel wie i) Phenole wie Phenol, Cresol, Xylenol, Nitrophenol, Chlorophenol, Ethylphenol, t-Butylphenol, Hydroxybenzoesäure, Ester dieser Säure oder 2,5- di-t-Butyl-4-hydroxytoluol; ii) Lactame, wie ε-Caprolactam, δ-Valerolactam, γ-Butyrolactam oder β-Propiolactam; iii) aktive methylenische Verbindungen, wie Diethylmalonat, Dimethylmalonat, Ethylacetoacetat, Methylacetoacetat oder Acetylaceton; iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol oder Acetocyanhydrin; v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol; vi) Säureamide wie Acetoanilid, Acetoanisidinamid, Acrylamid, Methacrylamid, Essigsäureamid, Stearinsäureamid oder Benzamid; vii) Imide wie Succinimid, Phthalimid oder Maleimid; viii) Amine wie Diphenylamin, Phenylnaphthylamin, Xylidin, N-Phenylxylidin, Cabazol, Anilin, Naphthylamin, Butylamin, Dibutylamin oder Butylphenylamin; ix) Imidazole wie Imidazol oder 2-Ethylimidazol, x) Harnstoffe wie Harnstoff, Thioharnstoff, Ethylenharnstoff, Ethylenthioharnstoff oder 1,3-Diphenylharnstoff; xi) Carbamate wie N-Phenylcarbamidsäurephenylester oder 2-Oxazolidon; xii) Imine wie Ethylenimin, xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime; xiv) Salze der schwefeligen Säure wie Natriumbisulfit oder Kaliumbisulfit; xv) Hydroxamsäureester wie Benzylmethacrylohydroxamat (BMH) oder Allylmethacrylohydroxamat oder xvi) substituierte Pyrazole, Ketoxime, Imidazole oder Triazole.

Die vorstehend beschriebenen erfindungsgemäß zu verwendenden Oligomere Ib) oder Ic) und Trimere Ib) oder Ic) haben vorteilhafterweise eine NCO-Funktionalität von 2,0-5,0, vorzugsweise von 2,2-4,0, insbesondere von 2,5-3,8.

Die vorstehend im Detail beschriebene erfindungsgemäß zu verwendenden Isocyanate Ia), deren erfindungsgemäß zu verwendenden Oligomere Ib) und/oder Trimere Ib) und/oder die erfindungsgemäß zu verwendenden Vernetzer Ic) können die einzigen in der erfindungsgemäßen Komponente (I) vorliegenden Vernetzungsmittel sein.

Indes können in der erfindungsgemäßen Komponente (I) noch weitere Vernetzungsmittel enthalten sein, vorzugsweise in einem Gewichtsmengenanteil von 10-90%, insbesondere 40-60%, bezogen auf die Gesamtmenge an Vernetzungsmitteln in der Komponente (I).

Als zusätzliche Vernetzungsmittel kommen vor allem die vorstehend beschriebenen Isocyanate Ia) und/oder deren Oligomere Ib) und/oder Trimere Ib) in Betracht, deren freie Isocyanatgruppen vollständig mit den vorstehend beschriebenen üblichen und bekannten Blockierungsmitteln blockiert wurden.

Des weiteren kommen die üblichen und bekannten Isocyanate und/oder ihre Trimere und/oder Oligomere als zusätzliche Vernetzungsmittel in Betracht. Hierbei handelt es sich um beliebige organische Polyisocyanate mit aliphatisch, cycloaliphatisch, araliphatisch und/oder aromatisch gebundenen Isocyanatgruppen. Bevorzugt werden Polyisocyanate mit 2 bis 5 lsocyanatgruppen pro Molekül und mit Viskositäten von 100 bis 2000 mPa.s (bei 23 °C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, W. Siefken, Liebigs Ann. Chem. 562, 75 bis 136, der europäischen Patentschrift EP-A-101 832 oder den US-Patentschriften US-PS-3,290,350, UP-PS-4,130,577 und US-PS-4,439,616 beschrieben. Zum Teil sind sie auch im Handel erhältlich wie 1,3-Bis(2-isocyanatoprop-2-yl)benzol von der American Cyanamid Company unter dem Handelsnamen TMXDI (META)^{R}.

Beispiele geeigneter bekannter Polyisocyanate sind Phenylendiisocyanat, Toluylendiisocyanat, Xylylidendiisocyanat, 1,3-Bis(2-isocyanatoprop-2-yl)benzol (Tetramethylxylyliden-diisocyant), Bisphenylendiisocyanat, Naphtylendiisocyanat, Di-phenylmethandiisocyanat, Isophorondiisocyanat, Cyclopentyldiisocyanat, Cyclohexyldiisocyanat, Methyl-cyclohexylendiisocyanat, 2-Isocyanatopropylcyclohexylisocyanat, Dicyclohexylmethan-2,4'-diisocyanat oder Dicyclohexylmethan-4,4'-diisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat.

Geeignet sind auch die üblichen und bekannten isocyanatgruppenhaltigen Polyurethanpräpolymere, die durch Reaktion der vorstehend genannten Polyole mit einem Überschuß an diesen Polyisocyanaten hergestellt werden können und die bevorzugt niederviskos sind. Es können auch die üblichen und bekannten Isocyanuratgruppen, Biuretgruppen, Allophanatgruppen, Urethangruppen, Harnstoffgruppen und/oder Uretdiongruppen aufweisende Polyisocyanate eingesetzt werden. Urethangruppen aufweisende Polyisocyanate werden beispielsweise durch Umsetzung eines Teils der Isocyanatgruppen mit den vorstehend genannten Polyolen erhalten. Vorzugsweise werden aliphatische oder cycloaliphatische Polyisocyanate, insbesondere Tetramethylendiisocyanat, Hexamethylendiisocyanat, dimerisiertes und trimerisiertes Tetramethylendiisocyanat oder Hexamethylendiisocyanat, Isophorondiisocyanat, 2-Isocyanatopropylcyclohexylisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion-, Isocyanurat- und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt.

Außerdem können als weitere Vernetzungsmittel die vorstehend beschriebenen üblichen und bekannten Polysisocanate und deren Oligomere oder Trimere, deren Isocyanatgruppen partiell oder vollständig blockiert wurden, verwendet werden. Als Blockierungsmittel kommen die vorstehend beschriebenen üblichen und bekannten Blockierungsmittel in Betracht.

Außerdem können als weitere Vemetzungs die üblichen und bekannten Tris(alkoxycarbonylamino)triazine verwendet werden, wie sie in der US-Patentschrift US 5084541 beschrieben sind.

Ferner können als weitere Vernetzer die üblichen und bekannten Melaminharze, Aminoplastharze, Carbodiimide, Aziridine, Epoxide und/oder Siloxane der Komponente (I) beigegeben werden.

### Komponenten (II)

Der weitere wesentliche Bestandteil des erfindungsgemäßen 2K-Systems ist die Komponente (II). Ihr wesentlicher Bestandteil sind wiederum Bindemittel auf Basis von Polymeren, welche funktionelle Gruppen enthalten, die mit Isocyanatgruppen reagieren.

Beispiele erfindungsgemäß gut geeigneter Polymere sind Polyacrylate, Polyester, Polyurethane, acrylierte Polyurethane oder acrylierte Polyester. Ein Beispiel für eine erfindungsgemäß besonders gut geeignete funktionelle Gruppe ist die Hydroxylgruppe. Beispiele für erfindungsgemäß besonders gut geeignete Bindemittel sind die vorstehend genannten Polymere mit einer OH-Zahl im Bereich 20-400, insbesondere im Bereich 80-250, speziell im Bereich 80-200.

### Polyurethane

Die als Bindemittel eingesetzten Polyurethane sind prinzipiell bekannt. Geeignet sind beispielsweise die in der Literatur für den Einsatz in Wasserbasislacken beschriebenen Polyurethanharze. Beispiele gut geeigneter Polyurethanharze sind aus den europäischen und deutschen Patentschriften EP-A-355433, DE-OS 3545618, DE-OS 3813866 bekannt oder werden in der noch nicht veröffentlichen deutschen Patentanmeldung DE 4005961.8 beschrieben. Bezüglich näherer Einzelheiten der Herstellung der Polyurethanharze und Beispiele geeigneter Verbindungen sei daher auf diese Schriften verwiesen. Vorteilhafterweise kommen diese Polyurethanharze in einem oder mehreren organischen Lösungsmitteln gelöst zum Einsatz.

Bevorzugt werden wasserverdünnbare Polyurethanharze eingesetzt, die ein zahlenmittleres Molekulargewicht (Bestimmung: gelpermeationschromatographisch mit Polystyrol als Standard) von 1000 bis 30.000, vorzugsweise von 1500 bis 20000, sowie eine Säurezahl von 5 bis 70 mg KOH/g, vorzugsweise 10 bis 30 mg KOH/g aufweisen und durch Umsetzung, vorzugsweise Kettenverlängerung, von Isocyanatgruppen aufweisenden Präpolymeren herstellbar sind.

Die Herstellung des isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150 °C, bevorzugt 50 bis 130 °C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und sie können reaktionsträge anionische Gruppen enthalten. Um die Härte des Polyurethans zu erhöhen, kann man niedermolekulare Polyole einsetzen. Sie haben ein Molekulargewicht von 60 bis zu etwa 400, und können aliphatische, alicyclische oder aromatische Gruppen enthalten. Es werden dabei Mengen von bis zu 30 Gew.-% der gesamten Polyol-Bestandteile, bevorzugt etwa 2 bis 20 Gew.-%, eingesetzt.

Um ein NCO-Präpolymeres hoher Flexibilität zu erhalten, wird vorzugsweise ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethem mit einer Molmasse Mₙ von 400 bis 5000 bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden.

Als typische multifunktionelle Isocyanate werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung.

Die zur Bildung des Präpolymeren verwendeten Polyisocyanat- Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Beispiele geeigneter Polyisocyanate sind die in der erfindungsgemäßen Komponente (I) als zusätzliche Vernetzungsmittel beschriebenen Polyisocyanate und/oder deren Oligomere oder Trimere in unblockierter oder partiell blockierter Form.

Zur Herstellung wasserverträglicher Polyurethane könnenVerbindungen verwendet werden, die zwei mit Isocyanatgruppen reagierende H-aktive Gruppen und mindestens eine Gruppe enthalten, die die Wasserdispergierbarkeit gewährleistet (Trägergruppen). Geeignete Trägergruppen sind nicht-ionische Gruppen (z. B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die zwei mit Isocyanatgruppen reagierende H-aktive Gruppen und mindestens eine zur Anionenbildung befähigte Gruppe enthalten. Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den anderen gegenüber Isocyanatgruppen reaktiven Gruppen des Moleküls reagieren. Es werden dazu Alkansäuren mit zwei Substituenten am α-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.

Die durch die Carboxylgruppen-Neutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 6 Gew.-%. Die Menge an Dihydroxialkansäuren im unneutralisierten Präpolymeren ergibt eine Säurezahl von wenigstens 5, vorzugsweise wenigstens 10. Bei sehr niedrigen Säurezahlen sind i.a. weitere Maßnahmen zur Erzielung der Wasserdispergierbarkeit erforderlich. Die obere Grenze der Säurezahl liegt bei 70, vorzugsweise bei 40 mg KOH/g, bezogen auf den Feststoff.

Vorteilhafte NCO-Präpolymere können durch gleichzeitige Umsetzung des Polyols oder Polyolgemisches mit einem Diisocyanat-Überschuß hergestellt werden. Andererseits kann die Umsetzung auch in vorgeschriebener Reihenfolge stufenweise vorgenommen werden. Beispiele sind in den deutschen Patentschriften DE-OS 26 24 442 und DE-OS 32 10 051 beschrieben. Die Reaktionstemperatur beträgt bis zu 150 °C, wobei eine Temperatur im Bereich von 50 bis 130 °C bevorzugt wird.

Die Umsetzung wird fortgesetzt, bis praktisch alle Hydroxylfunktionen umgesetzt sind.

Vorteilhafte NCO-Präpolymere enthalten wenigstens etwa 0,5 Gew.-% Isocyanatgruppen, vorzugsweise wenigstens 1 Gew-% NCO, bezogen auf Feststoff. Die obere Grenze liegt bei etwa 15 Gew.-%, vorzugsweise 10 Gew.-%, besonders bevorzugt bei 5 Gew.-%.

Die Umsetzung kann gegebenenfalls in Gegenwart eines Katalysators, wie Organozinnverbindungen und/oder tertiären Aminen durchgeführt werden. Um die Reaktionsteilnehmer in flüssigem Zustand zu halten und eine bessere Temperaturkontrolle während der Reaktion zu ermöglichen, ist der Zusatz von organischen Lösemitteln, die keinen aktiven Wasserstoff nach Zerewitinoff enthalten, möglich. Die Menge an Lösemittel kann in weiten Grenzen variieren und sollte zur Bildung einer Präpolymer-Lösung mit geeigneter Viskosität ausreichen. Im allgemeinen werden 10 bis 70 Gew.-% Lösemittel, vorzugsweise 20 bis 50 Gew.-% Lösemittel, bezogen auf den Festkörper eingesetzt.

Die noch vorhandenen Isocyanatgruppen des Präpolymers werden mit einem Modifizierungsmittel umgesetzt. Diese Reaktion führt insbesondere zu einer weiteren Verknüpfung und Erhöhung des Molekulargewichts. Die Menge dieses Modifizerungsmittels wird durch seine Funktionalität und den NCO-Gehalt des Präpolymeren bestimmt. Das Aquivalentverhältnis der aktiven Wasserstoffatome im Modifizierungsmittel zu den NCO-Gruppen im Präpolymer sollte in der Regel geringer als 3:1 sein und vorzugsweise im Bereich zwischen 1:1 und 2:1 liegen.

Bevorzugt werden als Modifizierungsmittel für die Umsetzung mit dem Präpolymer Di-, besonders bevorzugt Tri- und/oder Polyole eingesetzt.

Es können aber auch andere Verbindungen mit aktiven Wasserstoffatomen als Modifizierungsmittel eingesetzt werden, beispielsweise Polyamine, allerdings nur unter der Voraussetzung, daß die Umsetzung des Präpolymers mit dem Modifizierungsmittel in einem organischen Lösemittel durchführbar (kontrollierbar) ist und bei dieser Reaktion keine unerwünschten Reaktionen, wie z. B. die bei Einsatz von Polyaminen häufig beobachtete Gelierung an der Eintropfstelle des Amins, auftreten.

Als Beispiel für mindestens drei Hydroxylgruppen enthaltene Polyole seien Trimethylolpropan, Glycerin, Erythrit, Mesoerythrit, Arabit, Adonit usw. genannt. Bevorzugt wird Trimethylolpropan eingesetzt. Die Umsetzung des Präpolymeren mit den Tri- und/oder Polyolen wird vorzugsweise durch die Stöchiometrie der eingesetzten Verbindungen so gesteuert, daß es zu Kettenverlängerungen kommt.

### Polyacrylate

Die als Bindemittel eingesetzten Polyacrylatharze sind ebenfalls bekannt und beispielsweise in DE-OS 3832826 beschrieben. Geeignet sind im allgemeinen wasserverdünnbare bzw. wasserdispergierbare Polyacrylatharze. Vorteilhafterweise lassen sie sich in Form organischer Lösungen darstellen.

Insbesondere für Klarlacke werden vorzugsweise Polyacrylatharze eingesetzt, die Hydroxylzahlen von 40 bis 240, vorzugsweise 60 bis 210, ganz besonders bevorzugt 100 bis 200, Säurezahlen von 0 bis 35, bevorzugt 0 bis 23, ganz besonders bevorzugt 3,9 bis 15,5, Glasübergangstemperaturen von -35 bis +70 0C, bevorzugt -20 bis +40 °C, ganz besonders bevorzugt -10 bis +15 °C, sowie zahlenmittlere Molekulargewichte Mₙ von 1500 bis 30000, bevorzugt 2000 bis 15000, ganz besonders bevorzugt 2500 bis 5000 aufweisen, wobei das Verhältnis M_{w}/Mₙ zwischen 1,2 und 5,0, vorzugsweise 1,2 und 4,0 liegt.

Die Glasübergangstemperatur der Polyacrylatharze wird durch Art und Menge der eingesetzten Monomere bestimmt und kann in üblicher und bekannter Weise anhand der Anzahl der im Polyacrylatharz einpolymerisierten n verschiedenen Monomeren, dem Gewichtsanteil des n-ten Monomers und der Glasübergangstemperatur des Homopolymers aus dem n-ten Monomer abgeschätzt werden. Die Auswahl der Monomeren kann daher vom Fachmann in einfacher Weise vorgenommen werden.

Ebenso gehören Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Als hydroxyfunktionelle Bindemittelkomponente werden beispielsweise Polyacrylatharze eingesetzt, die herstellbar sind, indem (a1) 10 bis 92, vorzugsweise 20 bis 60 Gew. -% eines Alkyl- oder Cycloalkylacrylates oder eines Alkyl- oder Cycloalkylmethacrylates mit 1 bis 18, vorzugsweise 4 bis 13 Kohlenstoffatomen im Alkyl- bzw. Cycloalkylrest oder Mischungen aus solchen Monomeren, (b1) 8 bis 60, vorzugsweise 12,5 bis 38,5 Gew.-% eines Hydroxyalkyl(meth)acrylates und/oder eines Hydroxycycloalkyl(meth)acrylates mit 2 bis 4 Kohlenstoffatomen im Hydroxyalkylrest oder Mischungen aus solchen Monomeren, (c1)0,0 bis 5,0, vorzugsweise 0,7 bis 3,0 Gew.-% Acrylsäure oder Methacrylsäure oder Mischungen aus diesen Monomeren und (d1) 0 bis 50, vorzugsweise 0 bis 30 Gew.-% von (a1), (b1) und (c1) verschiedene, mit (a1), (b1) und (c1) copolymerisierbare ethylenisch ungesättigte Monomere oder Mischungen aus solchen Monomeren zu Polyacrylatharzen mit Hydroxylzahlen von 40 bis 240, vorzugsweise 60 bis 150, Säurezahlen von 0 bis 35, vorzugsweise von 5 bis 20, Glasübergangstemperaturen von -35 bis +70 Grad C, bevorzugt von -20 bis +40 Grad C und zahlenmittleren Molekulargewichten von 1500 bis 30000, vorzugsweise von 2000 bis 15000, (gelpermeationschromatographisch mit Polystyrolstandard bestimmt) polymerisiert werden. Als Beispiele für (al)-Komponenten werden genannt: Methyl-, Ethyl-, Propyl-, n-Butyl-, Isobutyl-, tert.-Butyl-, Pentyl-, Hexyl-, Heptyl- und 2-Ethyl-hexylacrylat bzw. -methacrylat. Cyclohexylacrylat und Cyclohexylmethacrylat, Tert.-butylcyclohexyl(meth)acrylat oder Isobornyl(meth)acrylat. Als Beispiele für (bl)-Komponenten werden genannt: Hydroxyethyl-, Hydroxypropyl- Hydroxybutyloder Cyclohexandimethanolacrylat bzw. -methacrylat sowie Addukte aus Versaticsäureglycidylester und (Meth)Acrylsäure. Als Beispiele für (d1)-Komponenten werden genannt: Vinylaromaten, wie beispielsweise Styrol, Vinyltoluol, α-Methylstyrol, α-Ethylstyrol, kernsubstituierte Diethylstyrole, Isopropylstyrol, Butylstyrole und Methoxystyrole; Vinylether, wie beispielsweise Ethylvinylether, n-Propylvinylether, Isopropylvinylether, n-Butylvinylether und Isobutylvinylether und Vinylester, wie beispielsweise Vinylacetat, Vinylpropionat, Vinylbutyrat, Vinylpivalat und der Vinylester der 2-Methyl-2-ethylheptansäure. Die Hydroxylzahl und die Säurezahl der Polyacrylatharze kann der Fachmann problemlos durch die Menge an eingesetzter Komponente (b1) bzw. (c1) steuern.

Als hydroxyfunktionelle Bindemittelkomponente werden beispielsweise auch Polyacrylatharze eingesetzt, die erhältlich sind, indem (A1) 10 bis 51 Gew.-%, vorzugsweise 25 bis 41 Gew,-%, 4-Hydroxy-n-butylacrylat oder 4-Hydroxy-nbutylmethacrylat oder eine Mischung aus 4-Hydroxy-n-butylacrylat und 4-Hydroxy-n-butylmethacrylat, vorzugsweise 4-Hydroxy-n-butylacrylat, (A2) 0 bis 36 Gew.-%, vorzugsweise 0,1 bis 20 Gew.-%, eines von (A1) verschiedenen hydroxylgruppenhaltigen Esters der Acrylsäure oder eines hydroxylgruppenhaltigen Esters der Methacrylsäure oder eines Gemisches aus solchen Monomeren, (A3) 28 bis 85 Gew.-%, vorzugsweise 40 bis 70 Gew.-% eines von (A1) und (A2) verschiedenen aliphatischen oder cycloaliphatischen Esters der Methacrylsäure mit mindestens 4 C-Atomen im Alkoholrest oder eines Gemisches aus solchen Monomeren, (A4) 0 bis 3 Gew.-%, vorzugsweise 0,1 bis 2 Gew.-%, einer ethylenisch ungesättigten Carbonsäure oder einer Mischung aus ethylenisch ungesättigten Carbonsäuren und (A5) 0 bis 20 Gew.-%, vorzugsweise 5 bis 15 Gew.-% eines von (A1), (A2), (A3) und (A4) verschiedenen ungesättigten Monomeren oder eines Gemisches aus solchen Monomeren zu einem Polyacrylatharz mit einer Hydroxylzahl von 60 bis 200, vorzugsweise von 100 bis 160, einer Säurezahl von 0 bis 35, vorzugsweise von 0 bis 25, und einem zahlenmittleren Molekulargewicht von 1500 bis 10000, vorzugsweise 2500 bis 5000, polymerisiert werden, wobei die Summe der Gewichtsteile der Komponenten (A1) bis (A5) stets 100% ergibt und die Zusammensetzung der Komponente (A3) so gewählt wird, daß bei alleiniger Polymerisation der Komponente (A3) ein Polymethacrylatharz mit einer einer Glasübergangstemperatur von +10 bis +100 Grad C, vorzugsweise von +20 bis +60 Grad C, erhalten wird. Als Beispiele für die Komponente (A2) werden genannt: Hydroxyalkylester der Acrylsäure, wie z.B. Hydroxyethylacrylat und Hydroxypropylacrylat und Hydroxyalkylester der Methacrylsäure, wie z.B. Hydroxyethylmethacrylat und Hydroxypropylmethacrylat, wobei die Wahl so zu treffen ist, daß bei alleiniger Polymerisation der Komponente (A2) ein Polyacrylatharz mit einer Glasübergangstemperatur von 0 bis +80 Grad C, vorzugsweise von +20 bis +60 Grad C erhalten wird. Als Beispiele fiir die Komponente (A3) werden genannt: aliphatische Ester der Methacrysäure mit 4 bis 20 C-Atomen im Alkoholrest, wie z.B. n-Butyl-, iso-Butyl-, tert.-Butyl-, 2-Ethylhexyl-, Stearyl- und Laurylmethacrylat, und cycloaliphatische Ester der Methacrylsäure wie, z.B. Cyclohexylmethacrylat. Als Komponente (A4) werden vorzugsweise Acrylsäure und/oder Methacrylsäure eingesetzt. Als Beispiele für die Komponente (A5) werden genannt: vinylaromatische Kohlenwasserstoffe, z.B. Styrol, α-Alkylstyrol und Vinyltuluol, Amide der Acrylsäure und Methacrylsäure, z.B. Methacrylamid und Acrylamid, Nitrile der Acrylsäure und Methacrylsäure, Vinylether und Vinylester. Als Komponente (A5) werden vorzugsweise vinylaromatische Kohlenwasserstoffe, insbesondere Styrol, eingesetzt. Die Zusammensetzung der Komponente (A5) ist vorzugsweise so zu treffen ist, daß bei alleiniger Polymerisation der Komponente (A5) ein Polymer mit einer Glasübergangstemperatur von +70 bis +120 Grad C, vorzugsweise von +80 bis +100 Grad C erhalten wird. Die Säurezahl kann vom Fachmann durch Einsatz entsprechender Mengen der Komponente (A4) eingestellt werden. Analoges gilt für die Einstellung der Hydroxylzahl. Sie ist über die Menge an eingesetzter Komponente (A1) und (A2) steuerbar.

In einer Variante des im vorstehenden Absatz beschriebenen Polyacrylatharzes sind folgende zahlenmäßige Parameter gültig. Die Komponente (A1) wird mit 21-62, vorzugsweise 41-57 Gew.-% eingesetzt. Die Komponente (A3) wird mit 28-75, vorzugsweise 34-54 Gew.-% eingesetzt. Die Komponente (A3) wird hinsichtlich der Zusammensetzung so gewählt, daß bei alleiniger Polymerisation der Komponente (A3) ein Polymethacrylatharz mit einer Glasübergangstemperatur von +10 bis +100 Grad C, vorzugsweise von +20 bis +60 Grad C, erhalten wird. Als Beispiele fiir die Komponente (A2) werden genannt: Hydroxyalkylester der Acrylsäure, wie z.B. Hydroxyethylacrylat und Hydroxypropylacrylat und Hydroxyalkylester der Methacrylsäure, wie z.B. Hydroxyethylmethacrylat und Hydroxypropylmethacrylat, wobei die Wahl so zu treffen ist, daß bei alleiniger Polymerisation der Komponente (A2) ein Polyacrylatharz mit einer Glasübergangstemperatur von 0 bis +80 Grad C, vorzugsweise von +20 bis +60 Grad C erhalten wird. Als Beispiele für die Komponente (A3) werden genannt: aliphatische Ester der Methacrysäure mit 4 bis 20 C-Atomen im Alkoholrest, wie z.B. n-Butyl-, iso-Butyl-, tert.-Butyl-, 2-Ethylhexyl-, Stearyl- und Laurylmethacrylat, und cycloaliphatische Ester der Methacrylsäure wie, z.B. Cyclohexylmethacrylat. Als Komponente (A4) werden vorzugsweise Acrylsäure und/oder Methacrylsäure eingesetzt. Als Beispiele für die Komponente (A5) werden genannt: vinylaromatische Kohlenwasserstoffe, z.B. Styrol, α-Alkylstyrol und Vinyltuluol, Amide der Acrylsäure und Methacrylsäure, z.B. Methacrylamid und Acrylamid, Nitrile der Acrylsäure und Methacrylsäure, Vinylether und Vinylester. Als Komponente (A5) werden vorzugsweise vinylaromatische Kohlenwasserstoffe, insbesondere Styrol, eingesetzt. Die Zusammensetzung der Komponente (A5) ist vorzugsweise so zu treffen ist, daß bei alleiniger Polymerisation der Komponente (A5) ein Polymer mit einer Glasübergangstemperatur von +70 bis +120 Grad C, vorzugsweise von +80 bis +100 Grad C erhalten wird. Die Säurezahl kann vom Fachmann durch Einsatz entsprechender Mengen der Komponente (A4) eingestellt werden. Analoges gilt fiir die Einstellung der Hydroxylzahl. Sie ist über die Menge an eingesetzter Komponente (A1) und (A2) steuerbar.

In einer Variante des im vorstehenden Absatz beschriebenen Polyacrylatharzes sind folgende zahlenmäßige Parameter gültig. Die Komponente (A1) wird mit 21-62, vorzugsweise 41-57 Gew.-% eingesetzt. Die Komponente (A3) wird mit 28-75, vorzugsweise 34-54 Gew.-% eingesetzt. Die Komponente (A3) wird hinsichtlich der Zusammensetzung so gewählt, daß bei alleiniger Polymerisation der Komponente (A3) ein Polymer mit einer Glasübergangstemperatur von 0 bis +80 °C, vorzugsweise von 0 bis +60 °C erhalten wird. Die Komponente (A5) wird hinsichtlich der Zusammensetzung so gewählt, daß bei alleiniger Polymerisation der Komponente (A5) ein Polymer mit einer Glasübergangstemperatur von +70 bis +120 °C erhalten wird. Die Hydroxylzahl des erhaltenen Polyacrylatharzes liegt im Bereich 100-240, vorzugsweise im Bereich 160-220, höchstvorzugsweise im Bereich 170-200. Bevorzugt ist es, wenn das Acrylatharz viele primäre Hydroxylgruppen (z.B. 50-100% der OH-Gruppen insgesamt) enthält. Weiterhin bevorzugt ist es, wenn das Acrylatharz eine Glasübergangstemperatur von maximal 70 °C, vorzugsweise -40 bis +30 °C, aufweist. Schließlich ist es bevorzugt, wenn das Polyacrylatharz so ausgewählt ist, daß das ausgehärtete Beschichtungsmittel im gummielastischen Bereich ein Speichermodul E' mehr als 10^{7,5} Pa, vorzugsweise mehr als 10^{7,7} Pa, und einen Verlustfaktor tan d bei 20 °C von mindestens 0,05, vorzugsweise über 0,07 aufweist, wobei das Speichermodul E' und der Verlustfaktor tan d mit der Dynamisch-Mechanischen Thermo-Analyse (siehe Murayama, T., Dynamic Mechanical Analysis of Polymeric Material, Esevier, New York, 1978, und Loren W. Hill, Journal of Coatings Technology, Vol. 64, No. 808, May 1992, p. 31-33) an homogenen freien Filmen mit einer Schichtdicke von 40 ± 10 µm gemessen worden sind. Bei nicht besonders genannten Parametern besteht ohnehin Übereinstimmung

Beispiele fiir weitere gut geeignete Poylacrylate sind aus den europäischen Patentschriften EP-A-666780 oder EP-A-767185 oder den US-Patentschriften US 5480943, 5475073 und 5534598 bekannt.

Die Herstellung dieser Polyacrylatharze kann nach allgemein gut bekannten Polymerisationsverfahren (siehe z.B. Houben-Weyl, Methoden der organischen Chemie, 4. Auflage, Band 14/1, Seite 24 bis 255 (1961)) erfolgen. Sie werden vorzugsweise mit Hilfe der Lösungsmittelpolymerisation hergestellt. Hierbei wird üblicherweise ein organisches Lösungsmittel bzw. Lösungsmittelgemisch vorgelegt und zum Sieden erhitzt. In dieses organische Lösungsmittel bzw. Lösungsmittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 180 °C, vorzugsweise zwischen 130 und 150 °C. Als Polymerisationsinitiatoren werden vorzugsweise freie Radikale bildende Initiatoren eingesetzt. Initiatorenart und -menge werden üblicherweise so gewählt, daß bei der Polymerisationstemperatur während der Zulaufphase ein möglichst konstantes Radikalangebot vorliegt. Als Beispiele für einsetzbare Initiatoren werden genannt: Dialkylperoxide wie Di-tert.-Butylperoxid und Dicumylperoxid; Hydroperoxide wie Cumolhydroperoxid und tert.-Butylhydroperoxid; Perester wie tert.-Butylperbenzoat, tert.-Butylperpivalat, tert.-Butylper-3,5,5-trimethylhexanoat und tert.-Butylper-2-ethylhexanoat oder Azoverbindungen wie Azobisisobutyronitril. Die Polymerisationsbedingungen (Reaktionstemperatur, Zulaufzeit der Monomerenmischung, Menge und Art der organischen Lösungsmittel und Polymerisationsinitiatoren, evt. Mitverwendung von Molekulargewichtsreglern, z.B. Mercaptane, Thioglykolsäureester und Chlorwasserstoffe) werden so ausgewählt, daß die Polyacrylatharze ein zahlenmittleres Molekulargewicht wie angegeben (bestimmt durch Gelpermeationschromatographie unter Verwendung von Polystyrol als Eichsubstanz) aufweisen.

### Polyester

Als Bindemittel sind auch wasserverdünnbare bzw. wasserdispergierbare und in Form organischer Lösungen darstellbare Polyesterharze verwendbar. Eingesetzt werden beispielsweise entsprechende handelsübliche wasserverdünnbare bzw. was-serdispergierbare Polyesterharze sowie die überlicherweise in Wasserbasislacken eingesetzten Polyesterharze.

Als hydroxyfunktionelle Bindemittelkomponente werden insbesondere fiir Klarlacke beispielsweise Polyesterharze bzw. Alkydharze eingesetzt, die herstellbar sind, indem (a) eine cycloaliphatische oder aliphatische Polycarbonsäure oder eine Mischung aus solchen Polycarbonsäuren bzw.deren Anhydride (b) ein aliphatisches oder cycloaliphatisches Polyol mit mehr als zwei Hydroxylgruppen im Molekül oder eine Mischung aus solchen Polyolen (c) ein aliphatisches oder cycloaliphatisches Diol oder eine Mischung aus solchen Diolen und (d) eine aliphatische lineare oder verzweigte gesättigte Monocarbonsäure oder eine Mischung aus solchen Monocarbonsäuren in einem molaren Verhältnis von (a2) : (b2) : (c2) : (d2) = 1,0 : 0,2 - 1,3 : 0,0 - 1,1 : 0,0 - 1,4, vorzugsweise 1,0 : 0,5 - 1,2 : 0,0 - 0,6 : 0,2 - 0,9 zu einem Polyesterharz bzw. Alkydharz umgesetzt werden. Als Beispiele für den Bestandteil (a) werden genannt: Hexahydrophthalsäure, Hexahydrophthalsäureanhydrid, 1,4-Cyclohexandicarbonsäure, Endomethylentetrahydrophthalsäure, Camphersäureanhydrid, Oxalsäure, Malonsäure, Bernsteinsäure, Glutarsäure, Adipinsäure, Pimelinsäure, Korksäure, Azelainsäure und Sebacinsäure. Als Beispiele für den Bestandteil (b2) werden genannt: Pentaerythrit, Trimethylolpropan, Trimethylolethan und Glycerin. Als Beispiele für den Bestandteil (c2) werden genannt: Ethylenglykol, Diethylenglykol, Propylenglykol, Neopentylglykol, 2-Methyl-2-propylpropandiol-1,3,2-Ethyl-2-butylpropandiol-1,3, 2,2,4-Trimethyl- pentandiol-1,5, 2,2,5-Trimethylhexandiol-1,6, Hydroxypivalinsäureneopentylglykolester und Dimethylolcyclohexan. Als Beispiele fiir den Bestandteil (d2) werden genannt: 2-Ethylhexansäure, Laurinsäure, Isooctansäure, Isononansäure und Monocarbonsäuremischungen, die aus Kokosfett oder Palmkernfett gewonnen werden.

Die Herstellung von Hydroxylgruppen tragenden Polyester- und/oder Alkydharzen ist z.B. in Ullmanns Encyklopädie der technischen Chemie, dritte Auflage, 14. Band, Urban & Schwarzenberg, München, Berlin 1863, Seiten 80 bis 89 und Seiten 99 bis 105, in den Büchern: Résines Alkydes-Polyesters von J.

Bourry, Paris Verlag Dunod 1952, Alkyd Resins von C.R. Martens, Reinhold Publishing Corporation, New York 1961 und Alkyd Resin Technology von T.C.
Patton, Interscience Publishers 1962 beschrieben.

Die vorstehend beschriebenen Bindemittel können selbstverständlich auch als Mischungen verwendet werden.

Darüberhinaus kann die Komponente (II) zusätzlich andere wasserverdünnbare bzw. wasserdispergierbare Bindemittel enthalten.

Außerdem kann die Komponente (II) noch Vernetzungsmittel enthalten, welche erst bei höheren Temperaturen mit den reaktiven funktionellen Gruppen der Bindemittel reagieren. Beispiele geeigneter Vernetzungsmittel sind die vorstehend bei der Komponente (I) beschriebenen vollständig blockierten erfindungsgemäß zu verwendenden Isocyanate und/oder üblichen und bekannten Polyisocyante, die Tris(alkoxyarbonylamino)triazine und/oder die üblichen und bekannten Melaminharze, Aminoplastharze, Carbodiimide, Aziridine, Epoxide und/oder Siloxane

### Weitere Zusatzstoffe

Im einzelnen kann das erfindungsgemäße 2K-System UV-Absorber, vorzugsweise Triazin- oder Benzotriazolverbindungen und Radikalfänger in zumindest einer der beiden Komponenten (I) und/oder (II) enthalten. Das erfindungsgemäße 2K-System kann ferner Rheologiemittel, Katalysatoren wie zinnorganische Verbindungen oder wismuthaltige Verbindungen sowie sonstige Lackhilfsstoffe in zumindest einer der beiden Komponenten (I) und/oder (II) enthalten. Selbstverständlich können auch Pigmente jeglicher Art, beispielsweise Farbpigmente wie Azopigmente, Phthalocyaninpigmente, Carbonylpigmente, Dioxazinpigmente, Titandioxid, Farbruß, Eisenoxide und Chrom- bzw. Kobaltoxide, oder Effektpigmente wie Metallplättchenpigmente, insbesondere Aluminiumplättchenpigmente und Perlglanzpigmente, in zumindest einer der beiden Komponenten (I) und/oder (II) eingebaut sein. Vorzugsweise sind aber keine oder transparente Pigmente vorgesehen.

### Zusammensetzung des erfindungsgemäßen 2K-Systems

Das erfindungsgemäße 2K-System enthält die erfindungswesentlichen Komponenten (I) und (II) in breit variierenden Gewichtsverhältnissen, welche sich im wesentlichen nach den Konzentrationen der in den in den Komponenten (I) und (II) vorhandenen reaktiven funktionellen Gruppen und nach den Applikationsbedingungen fiir das 2K-System richten. Der Fachmann kann daher die für einen speziellen Anwendungszweck erforderlichen Gewichtsverhältnisse in einfacher Weise ermitteln.

Erfindungsgemäß werden die Mengen der Komponenten (I) und (II) in den Verhältnissen zueinander so gewählt sind, daß das Verhältnis "funktionelle Gruppen, die mit Isocyanatgruppen reagieren : NCO", insbesondere "OH-Gruppen : NCO", 1,0:0,5 bis 1,0:2,0, vorzugsweise 1,0:0,8 bis 1,0:1,5, insbesondere 1,0:0,8 bis 1,0:1,3, beträgt.

### Herstellung

Die Herstellung der beiden Komponenten (I) und (II) erfolgt nach den üblichen Methoden aus den einzelnen Bestandteilen unter Rühren. Die Herstellung des erfindungsgemäßen 2K-Systems aus den Komponenten (I) und (II) erfolgt ebenfalls mittels Rühren bzw. Dispersion unter Verwendung der üblicherweise eingesetzten Vorrichtungen, beispielsweise mittels Dissolver o.ä. oder mittels ebenfalls üblicherweise eingesetzter 2-Komponenten-Dosier- und -Mischanlagen oder mittels des in der deutschen Patentschrift DE-A-195 10 651, Seite 2, Zeile 62, bis Seite 4, Zeile 5, beschriebenen Verfahrens zur Herstellung wäßriger 2-K-Polyurethanlacke.

Die Komponenten, insbesondere die Komponente (II), können als nichtwäßrige (i.e. mit organischen Lösungsmitteln) oder als wäßrige Komponenten formuliert sein. Im Falle einer nichtwäßrigen Formulierung können die in der Lackherstellung üblichen organischen Lösungsmittel Verwendung finden. Mittels wäßriger Komponenten werden wäßrige Beschichtungsmittel nach Mischung der Komponenten (I) und (II) erhalten. Ist ein wäßriges Beschichtungsmittel gewünscht, so können die Komponenten (I) und/oder (II) aber auch weitgehend wasserfrei und weitgehend frei von organischen Lösungsmitteln, jedoch als in Wasser dispergierbar formuliert sein. Dann wird das wäßrige Beschichtungsmittel durch Mischung der Komponenten und Zugabe von Wasser erhalten. Eine in Wasser dispergierbare bzw. lösbare Komponente (II) ist auf übliche Weise formulierbar, indem beispielsweise saure Gruppen in das Bindemittel eingebracht werden, welche dann mit einer üblichen Base, beispielsweise Ammoniak oder einem organischen Amin wie Triethylamin neutralisiert werden. Die Lösung bzw. Dispersion einer in Wasser dispergierbaren Komponente (I) und/oder (II) in Wasser erfolgt auf übliche Weise z.B. durch starkes Rühren ggf unter leichter Erwärmung. Alternativ kann eine Lösung bzw. Dispersion in Wasser mittels nichtionischer Emulgatoren erfolgen. Insofern wird ebenfalls auf Standardverfahren der Herstellung wäßriger Lacke verwiesen.

### Verwendung

Schließlich betrifft die Erfindung auch noch die Verwendung erfindungsgemäßen 2K-Systems zur Beschichtung eines Substrats. Dabei werden die Komponente (I) und die Komponente (II) vor der Applikation, vorzugsweise unmittelbar vor der Applikation, zu dem Beschichtungsmittel miteinander vermischt, appliziert und gemeinsam eingebrannt. Die Komponente (I) und die Komponente (II) können ggf. mit Hilfe einer speziellen Zweikomponenten-Applikationseinrichtung appliziert und zusammen eingebrannt werden.

Mit den unter Verwendung des erfindungsgemäßen 2K-Systems hergestellten wäßrigen Lacken können grundierte oder nicht grundierte Kunststoffteile und Kunststoffolien wie z. B. ABS, AMMA, ASA, CA, CAB, EP, UF, CF, MF, MPF, PF, PAN, PA, PC, PE, HDPE, LDPE, LLDPE,UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden.

Die zu lackierenden Kunststoffteile und -folien können selbstverständlich auch aus Polymerblends, modifizierten Kunststoffen oder faserverstärkten Kunststoffen bestehen. Bevorzugt werden die erfindungsgemäßen Beschichtungsmittel zur Beschichtung von PPE/PA-Blends, Polycarbonat-Blends (z.B. PC/ASA, PC/PBT) und Polypropylen-Blends eingesetzt. Insbesondere kommen die erfindungsgemäßen Beschichtungsmittel fiir die üblicherweise im Fahrzeugbau, insbesondere Kraftfahrzeugbau, eingesetzten Kunststoffe zum Einsatz.

Im Falle von nichtfunktionalisierten und/oder unpolaren Substratoberflächen müssen diese vor der Beschichtung einer Vorbehandlung, wie Plasma oder Beflammen, unterzogen werden.

Als Grundierung kommen dabei alle üblichen Grundierungen, und zwar sowohl konventionelle als auch wäßrige Grundierungen in Betracht. Selbstverständlich können auch strahlenhärtbare konventionelle sowie strahlenhärtbare wäßrige Grundierungen eingesetzt werden.

Das erfindungsgemäße 2K-System wird zur Herstellung von Ein- oder Mehrschichtlackierungen und bevorzugt zur Herstellung von Decklacken eingesetzt. Es kann aber auch zur Herstellung eines über einer Basislackschicht zu applizierenden Klarlacks, beispielsweise eines Klarlacks einer nach dem naß-innaß-Verfahren hergestellten Mehrschichtlackierung bestimmt sein.

Selbstverständlich können die Kunststoffe oder die anderen Substrate auch direkt mit dem Klarlack oder dem Decklack beschichtet werden.

Schließlich können die Beschichtungsmittel auch auf andere Substrate, wie beispielsweise Metall, Holz, Glas oder Papier, appliziert werden. Die Applikation erfolgt mit Hilfe üblicher Methoden, beispielsweise Spritzen, Rakeln, Tauchen oder Streichen.

Aufgrund der genannten erfindungsgemäßen Verwendungen des erfindungsgemäßen 2K-Systems fallen auch damit hergestellte Bindemittel bzw. Lacke, sowie mit diesen Bindemitteln bzw. Lacken beschichtete Gegenstände unter die Erfindung.

Die erfindungsgemäßen 2K-Systeme werden üblicherweise bei Temperaturen von Raumtemperatur von bis 250°C, bevorzugt bei Temperaturen zwischen 60 und 180°C und besonders bevorzugt bei Temperaturen zwischen 60 und 150°C, gehärtet. In speziellen Anwendungsformen können auch höhere Härtungstemperaturen angewendet werden.

Die erfindungsgemäßen 2K-Systeme werden vorzugsweise zur Herstellung von Decklackierungen eingesetzt. Die erfindungsgemäßen 2K-Systeme können sowohl bei der Serien- als auch bei der Reparaturlackierung von Automobilkarosserien eingesetzt werden.

Sie liefern außerordentlich vorteilhafte Beschichtungen, welche sowohl in hohem Maße kratzfest als auch ausgesprochen säurebeständig sind.

Die Erfindung wird im folgenden unter Bezugnahme auf das Beispiel näher beschrieben:

### Beispiel und Vergleichsversuch

Ein erfindungsgemäßes (Zusammensetzung B) und ein herkömmliches 2K-System (Zusammensetzung A) wurden aus den in der Tabelle 1 aufgeführten Bestandteilen hergestellt und auf Prüftafeln appliziert.

**Tabelle 1:**

| Zusammensetzung des erfindungsgemäßen (B) und des herkömmlichen (A) 2K-Systems | | |
|---|---|---|
| **Bestandteile** | **Zusammensetzung A** (Gew.-Tle.) | **Zusammensetzung B** (Gew.-Tle.) |
| Komponente I | | |
| Isocyanathärter 1^{a)} | 33 | |
| Isocyanathärter 2^{b)} | | 58,5 |

| Komponente II | | |
|---|---|---|
| OH-Acrylat^{c)} | 83,97 | 83,97 |
| TIN 384^{d)} | 1,2 | 1,2 |
| TIN 292^{e)} | 1,0 | 1,0 |
| DBTL^{f)} | 0,004 | 0,004 |
| Worlee^{R} ADD315^{g)} | 0,096 | 0,096 |
| ZN 73-1280^{h)} | 1,5 | 1,5 |
| Butylglykolacetat | 3,93 | 3,93 |
| Xylol | 0,2 | 0,2 |
| GB-Esterⁱ⁾ | 4,5 | 4,5 |
| Ethoxypropylacetat | 2,0 | 2,0 |
| Butanol | 1,6 | 1,6 |
| Summe: | 100 | 100 |

| | | |
|---|---|---|
| a) = Anlösung eines Polyisocyanats auf der Basis Hexamethylendiisocyanat (80%-ige Anlösung von Desmodur N 3390 von Bayer AG in Butylacetat/Solventnaphtha) | | |
| b) = Anlösung des erfindungsgemäß zu verwendenden Polyisocyanats Ia), isocyanat von 1,3-Bis-(methylenisocyanat)-cyclohexan mit einem NCO-Gehalt von 19,4 Gew.-% und einer Viskosität von 9400 mPas (80%-ige in Methoxypropylacetat bei 25°C), 50%-ige in Methoxypropylacetat/Solventnaphtha | | |
| c) = übliches und bekanntes Acrylatharz aus Styrol, n-Butylmethacrylat, t-butylacrylat, Hydroxypropylmethacrylat und Acrylsäure, wie beschrieben in DE 197 25 188.9, verdünnt auf 53% Feststoffgehalt mit einer Mischung aus Methoxypropylacetat, Butylglycolacetat und Butylacetat | | |
| d) = handelsübliches Lichtschutzmittel Tinuvin 384^{R} der Firma Ciba Specialty Chemical Inc. | | |
| e) = handelsübliches Lichtschutzmittel Tinuvin 292^{R} der Firma Ciba Specialty Chemical Inc. | | |
| f) = Dibutylzinndilaurat | | |
| g) = handelsübliches Verlaufsadditiv der Firma Worlee, Lauenburg, DE | | |
| h) = 5%-ige Lösung eines mit einem Polyether substituierten Polydimethylsiloxans in Xylol | | |
| i) = Glycolsäure-butylester der Firma Wacker | | |

### Lacktechnische Prüfungen:

### 1. Kratzfestigkeit

### 1.1 Bürstentest

Die Kratzfestigkeit der ausgehärteten 2K-Systeme A und B wurde mit Hilfe des in Fig. 2 auf Seite 28 des Artikels von P. Betz und A. Bartelt, Progress in Organic Coatings, 22 (1993), Seiten 27 bis 37, beschriebenen BASF-Bürstentests, der allerdings bezüglich des verwendeten Gewichts (2000 g statt der dort genannten 280 g) abgewandelt wurde, beurteilt.

Hierzu wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben.

Zur Herstellung der Prüftafeln wurde zunächst ein Elektrotauchlack mit einer Schichtdicke von 18 - 22 µm, dann ein Füller mit einer Schichtdicke von 35 - 40 µm, dann ein schwarzer Basislack mit einer Schichtdicke von 20 - 25 µm und abschließend das zu prüfende Beschichtungsmittel mit einer Schichtdicke von 40 - 45 µm appliziert und jeweils gehärtet. Die Tafeln wurden nach Applikation der Lacke 2 Wochen bei Raumtemperatur gelagert, bevor die Prüfung durchgeführt wurd.

Der Prüfkörper war ein mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrugt 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült und die Prüftafel mit Druckluft trockengeblasen.

Gemessen wurde der Glanz nach DIN 67530 vor und nach Beschädigung (Meßrichtung senkrecht zur Kratzrichtung) . Die Ergebnisse sind in der Tabelle 2 zusammengestellt.

### 1.2 Sandtest

Zusätzlich wurde die Kratzfestigkeit nach dem Sandtest bestimmt. Hierzu wurde die Lackoberfläche mit Sand belastet (20g Quarz-Silbersand 1,5-2,0 mm). Der Sand wurde in einen Becher (Boden plan abgeschnitten) gegeben, der fest auf der Prüftafel befestigt wurde. Es wurden die gleichen Prüftafeln wie oben im Bürstentest beschrieben verwendet. Mittels eines Motorantriebes wurde die Tafel mit dem Becher und dem Sand in Schüttelbewegungen versetzt. Die Bewegung des losen Sandes verursachte dabei die Beschädigung der Lackoberfläche (100 Doppelhübe in 20 s). Nach der Sandbelastung wurde die Prüffläche vom Abrieb gereinigt, unter einem kalten Wasserstrahl vorsichtig abgewischt und anschließend mit Druckluft getrocknet. Gemessen wurde der Glanz nach DIN 67530 vor und nach Beschädigung.

Die Ergebnisse finden sich ebenfalls in der Tabelle 2.

**Tabelle 2:**

| Kratzfestigkeit der aus dem erfindungsgemäßen (B) und dem herkömmlichen (A) 2K-System hergestellten Beschichtungen | | |
|---|---|---|
| **Glanzwerte** | **Zusammensetzung A** | **Zusammensetzung B** |
| Ausgangsglanz (20°) | 84 | 83 |

| Restglanz (20°/Δ): | | |
|---|---|---|
| Bürstentest | 51(33) | 49 (34) |
| Sandtest | 56 (28) | 54 (29) |

### 2. Säurebeständigkeit nach dem Säuretest BART

Der BART (BASF ACID RESISTANCE TEST) diente der Ermittlung der Beständigkeit von Lackoberflächen gegen Säuren, Laugen und Wassertropfen. Dabei wurde die Beschichtung auf einem Gradientenofen nach der Einbrennung weiteren Temperaturbelastungen ausgesetzt (30 min 40°C, 50°C, 60°C und 70°C). Zuvor wurden die Testsubstanzen (Schwefelsäure 15%-ig, 10%-ig, 36%-ig; schweflige Säure 6%-ig, Salzsäure 10%-ig, Natronlauge 5%-ig, VE (=vollentsalztes) Wasser- 1,2,3 bzw. 4 Tropfen) definiert mit einer Dosierpipette aufgebracht. Im Anschluß an die Einwirkung der Substanzen wurden diese unter fließendem Wasser entfernt und die Beschädigungen nach 24 h entsprechend einer vorgegebenen Skala visuell beurteilt:
- Benotung: Aussehen
- 0: kein Defekt
- 1: leichte Markierung
- 2: Markierung/Vermattung/keine Erweichung
- 3: Markierung/Vermattung7Farbtonveränderung/Erweichung
- 4: Risse/beginnende Durchätzung
- 5: Klarlack entfernt

Es wurde jede einzelne Markierung (Spot) ausgewertet und das Ergebnis für jede Beschichtung in geeigneter Form (z.B. Notensummen für eine Temperatur) festgehalten.

Die Ergebnisse des Tests finden sich in der Tabelle 3

**Tabelle 3:**

| Die Säurebeständigkeit der aus den erfindungsgemäßen (B) und den herkömmlichen (A) 2K-Systemen hergestellten Beschichtungen | | | | | | | | |
|---|---|---|---|---|---|---|---|---|
| | **Zusammensetzung A** | | | | **Zusammensetzung B** | | | |
| **Temperatur (°C)** | **40** | **50** | **60** | **70** | **40** | **50** | **60** | **70** |
| H₂SO₄ 1%-ig | 0 | 0 | 0 | 4 | 0 | 0 | 0 | 1,5 |
| H₂SO₄ 10%-ig | 0 | 0 | 0 | 4 | 0 | 0 | 0 | 1,5 |
| H₂SO₄ 36%-ig | 0 | 0 | 0,5 | 4,5 | 0 | 0 | 0 | 1,5 |
| HCl 10%-ig | 0 | 0 | 0 | 0,5 | 0 | 0 | 0 | 2 |
| H₂SO₃ 5%-ig | 0 | 0 | 0 | 3 | 0 | 0 | 0 | 1,5 |
| NaOH 5%-ig | 0 | 0 | 0 | 0,5 | 0 | 0 | 0 | 0 |
| VE-Wasser 1 | 0 | 0 | 0 | 0 | 0 | 0 | 0 | 0,5 |
| VE-Wasser 2 | 0 | 0 | 0 | 0 | 0 | 0 | 0 | 0 |
| VE-Wasser 3 | 0 | 0 | 0 | 0 | 0 | 0 | 0 | 0 |
| VE-Wasser 4 | 0 | 0 | 0 | 0 | 0 | 0 | 0 | 0 |
| | | | | | | | | |
| **Summe Säure:** | **0** | **0** | **0,5** | **16,5** | **0** | **0** | **0** | **8** |
| **Summe Wasser:** | **0** | **0** | **0** | **0** | **0** | **0** | **0** | **0,5** |

Die Ergebnisse des Bürstentests und des Sandtests einerseits und des BART andererseits untermauern, daß das erfindungsgemäße 2K-System B dem herkömmlichen 2K-System A in der Kratzfestigkeit entspricht, dieses in der Säurebeständigkeit aber deutlich übertrifft.

## Patentansprüche

1. Zweikomponenten-Beschichtungsmittel, enthaltend
(I) eine Komponente, welche mindestens ein Isocyanat als Vernetzungsmittel enthält,
(II) eine Komponente, welche mindestens ein Bindemittel mit funktionellen Gruppen, die mit Isocanatgruppen reagieren, enthält,
**dadurch gekennzeichnet,**
**daß** die Komponente (I)
Ia) zumindest ein Isocyanat mit mindestens einer Diisocyanat-Struktureinheit, welche
i) eine ungesättigte bzw. aromatische oder nicht aromatische Ringstruktur mit 5 - 10 Ringatomen und
ii) zwei an die Ringstruktur gebundene Isocyanatgruppen aufweist,
wobei
iii) im Falle einer nicht aromatischen Ringstruktur und
α) beide Isocyanatgruppen über lineares C₁-C₉-Alkyl und/oder lineares C₂-C₁₀-Etheralkyl oder
β) eine Isocyanatgruppe direkt und die andere Isocyanatgruppe über lineares C₂-C₁₀ Etheralkyl
und
iv) im Fall einer ungesättigten oder aromatischen Ringstruktur mindestens eine der beiden Isocyanatgruppen über lineares C₂-C₉-Alkyl und/oder lineares C₂-C₁₀-Etheralkyl, welche beiden Reste keine benzylischen Wasserstoffatome aufweisen,
mit der Ringstruktur verbunden ist oder sind;
und/oder
Ib) zumindest ein Oligomer dieses Isocyanats Ia) mit 2 bis 10 Isocyanateinheiten
und/oder
Ic) zumindest ein partiell blockiertes Isocyanat Ia) und/oder Oligomer Ib),
enthält.

2. Das Zweikomponenten-Beschichtungsmittel nach Anspruch 1, **dadurch gekennzeichnet, daß**
iv) im Fall einer aromatischen Ringstruktur beide Isocyanatgruppenüber lineares C₂-C₉-Alkyl und/oder lineares C₂-C₁₀-Etheralkyl, welche beiden Reste keine benzylischen Wasserstoffatome aufweisen,
mit der Ringstruktur verbunden sind.

3. Das Zweikomponenten-Beschichtungsmittel nach Anspruch 1 oder 2, **dadurch gekennzeichnet, daß** die Ringstruktur N-, O- und/oder Si-Atome enthält.

4. Das Zweikomponenten-Beschichtungsmittel nach Anspruch 3, **dadurch gekennzeichnet, daß** Silacyclopentan-, Silacyclohexan-, Oxolan-, Oxan-, Dioxan-, Morpholin-, Pyrrolidin-, Imidazolidin-, Pyrazolidin-, Piperidin-, Chinuklidin-, Pyrrol-, Imidazol-, Pyrazol-, Pyridin-, Pyrimidin-, Pyrazin-, Pyridazin- oder Triazinringe verwendet werden.

5. Das Zweikomponenten-Beschichtungsmittel nach einem der Ansprüche 1 bis 4, **dadurch gekennzeichnet, daß** die Ringstruktur ein bicyclisches Terpen-Grundgerüst, Decalin, Adamantan oder Chinuklidin ist.

6. Das Zweikomponenten-Beschichtungsmittel nach Anspruch 5, **dadurch gekennzeichnet, daß** das Terpen-Grundgerüst ein Caran-, Norcaran-, Pinan-, Camphanoder Norbonan-Grundgerüst ist.

7. Das Zweikomponenten-Beschichtungsmittel nach Anspruch 1 oder 2, **dadurch gekennzeichnet, daß** die Ringstruktur aus 6 C-Atomen besteht.

8. Das Zweikomponenten-Beschichtungsmittel nach einem der Ansprüche 1 bis 7, **dadurch gekennzeichnet, daß** als lineare C₁-C₉-Alkyle Methylen- oder Ethylensowie Tri, Tetra-, Penta-, Hexa-, Hepta-, Octa- oder Nonamethylenreste verwendet werden.

9. Das Zweikomponenten-Beschichtungsmittel nach Anspruch 7 oder 8, **dadurch gekennzeichnet, daß** die Ringstruktur ein Cyclohexanring ist, wobei beide Isocyanatgruppen über Methylenreste an die Positionen 1 und 3 des Cyclohexanrings gebunden sind oder wobei eine Isocyanatgruppe über ein C₃-C₉-Alkyl an die Positionen 1 und eine Isocyanatgruppe direkt an die Position 2 des Cyclohexanrings gebunden sind.

10. Das Zweikomponenten-Beschichtungsmittel nach Anspruch 4 oder 7, **dadurch gekennzeichnet, daß** die benzylischen Wasserstoffatome der C₂-C₉-Alkyle mit Resten R¹ und R² = C₁-C₁₀-Alkyl, Aryl oder Halogen, vorzugsweise Methyl, substituiert sind.

11. Das Zweikomponenten-Beschichtungsmittel nach Anspruch 10, **dadurch gekennzeichnet, daß** als C₂-C₉-Alkyl mit Resten R¹ und R² -CR¹R²-(CH₂)ₙ-, worin n = 1 bis 8- verwendet werden.

12. Das Zweikomponenten-Beschichtungsmittel nach einem der Ansprüche 10 oder 11, **dadurch gekennzeichnet, daß** beide Isocyanatgruppen über -CR¹R²-CH₂-CH₂an die Positionen 1 und 3 eines Benzolrings gebunden sind.

13. Das Zweikomponenten-Beschichtungsmittel nach einem der Ansprüche 1 bis 12, **dadurch gekennzeichnet, daß** die Komponente (I) 10 bis 90 Gew.-%, bezogen auf die Gesamtmenge der Vernetzer in der Komponente (I), an vollständig blockierten Isocyanaten Ia); vollständig blockierten Oligomeren Ib), sonstigen Polyisocyanaten, partiell blockierten und/oder vollständig blockierten sonstigen Polyisocyanaten; Oligomeren, dieser sonstigen Polyisocyanate; partiell und/oder vollständig blockierten Oligomeren,, dieser sonstigen Polyisocyanate; isocyanatgruppenhaltigen Polyurethanpräpolymeren und/oder partiell und/oder vollständig blockierten isocyanatgruppenhaltigen Polyurethanpräpolymeren; Tris(alkoxycarbonylamino)triazinen; Melaminharzen; Aminoplastharzen; Carbodiimide; Aziridinen; Epoxiden und/oder Siloxanen enthält.

14. Das Zweikomponenten-Beschichtungsmittel nach einem der Ansprüche 1 bis 13, **dadurch gekennzeichnet, daß** die Komponenten (II) mindestens ein Bindemittel mit funktionellen Gruppen, die mit Isocyanatgruppen reagieren, enthält,

15. Das Zweikomponenten-Beschichtungsmittel nach Anspruch 14, **dadurch gekennzeichnet, daß** als Bindemittel Polyacrylate, Polyester, Polyurethane, acrylierte Polyurethane und/oder acrylierte Polyester verwendet werden.

16. Das Zweikomponenten-Beschichtungsmittel nach Anspruch 14 oder 15, **dadurch gekennzeichnet, daß** als funktionelle Gruppen Hydroxylgruppen verwendet werden.

17. Das Zweikomponenten-Beschichtungsmittel nach einem der Ansprüche 1 bis 16, **dadurch gekennzeichnet, daß** die Mengen der Komponenten (I) und (II) in den Verhältnissen zueinander so gewählt sind, daß das Verhältnis "funktionelle Gruppen, die mit Isocyanatgruppen reagieren : NCO" 1,0:0,5 bis 1,0:2,0, beträgt.

18. Verwendung des Zweikomponenten-Beschichtungsmittels nach einem der Ansprüche 1 bis 17 in einem Verfahren zur Beschichtung eines Substrats, **dadurch gekennzeichnet, daß** die Komponente (I) und die Komponente (II) vor der Applikation, zu dem Beschichtungsmittel vermischt, appliziert und gemeinsam eingebrannt werden.

19. Verwendung eines Zweikomponenten-Beschichtungsmittels nach einem der Ansprüche 1 bis 17 zur Herstellung eines Decklacks oder eines Klarlacks.

## Claims

1. Two-component coating composition comprising
(I) a component which comprises at least one isocyanate as crosslinking agent,
(II) a component which comprises at least one binder having functional groups which react with isocyanate groups,
**characterized in that**
component (I)
Ia) comprises at least one isocyanate having at least one diisocyanate structural unit which
i) has an unsaturated/aromatic or non-aromatic ring structure having 5-10 ring atoms and
ii) has two isocyanate groups attached to the ring structure, where
iii) in the case of a non-aromatic ring structure
α) both isocyanate groups are attached via linear C₁-C₉-alkyl and/or linear C₂-C₁₀-ether-alkyl or
β) one isocyanate group is attached directly and the other isocyanate group via linear C₂-C₁₀-ether-alkyl, and
iv) in the case of an unsaturated aromatic ring structure at least one of the two isocyanate groups is attached via linear C₂-C₉-alkyl and/or linear C₂-C₁₀-ether-alkyl, both of which radicals have no benzylic hydrogen atoms, to the ring structure,
and/or
Ib) comprises at least one oligomer of the isocyanate Ia) having from 2 to 10 isocyanate units,
and/or
Ic) comprises at least one partially blocked isocyanate Ia) and/or an oligomer Ib).

2. The two-component coating composition according to Claim 1, **characterized in that**
iv) in the case of an aromatic ring structure both isocyanate groups are attached via linear C₂-C₉-alkyl and/or linear C₂-C₁₀-ether-alkyl, both of which radicals have no benzylic hydrogen atoms,
to the ring structure.

3. The two-component coating composition according to Claim 1 or 2, **characterized in that** the ring structure comprises N, O and/or Si atoms.

4. The two-component coating composition according to Claim 3, **characterized in that** silacyclopentane, silacyclohexane, oxolane, oxane, dioxane, morpholine, pyrrolidine, imidazolidine, pyrazolidine, piperidine, quinuclidine, pyrrole, imidazole, pyrazole, pyridine, pyrimidine, pyrazine, pyridazine or triazine rings are used.

5. The two-component coating composition according to one of Claims 1 to 4, **characterized in that** the ring structure is a bicyclic terpene framework, decalin, adamantane or quinuclidine.

6. The two-component coating composition according to Claim 5, **characterized in that** the terpene framework is a carane, norcarane, pinane, camphane or norbornane framework.

7. The two-component coating composition according to Claim 1 or 2, **characterized in that** the ring structure consists of 6 C atoms.

8. The two-component coating composition according to one of Claims 1 to 7, **characterized in that** linear C₁-C₉-alkyls used are methylene or ethylene and also tri-, tetra-, penta-, hexa-, hepta-, octa- or nonamethylene radicals.

9. The two-component coating composition according to Claim 7 or 8, **characterized in that** the ring structure is a cyclohexane ring, both isocyanate groups being attached to positions 1 and 3 of the cyclohexane ring via methylene radicals or one isocyanate group being attached via a C₃-C₉-alkyl to position 1 and one isocyanate group being attached directly to position 2 of the cyclohexane ring.

10. The two-component coating composition according to Claim 4 or 7, **characterized in that** the benzylic hydrogen atoms of the C₂-C₉-alkyls are substituted by radicals R¹ and R²: C₁-C₁₀-alkyl, aryl or halogen, preferably methyl.

11. The two-component coating composition according to Claim 10, **characterized in that** C₂-C₉-alkyl is used with radicals R¹ and R²: -CR¹R²-(CH₂)ₙ-, wherein n = 1 to 8.

12. The two-component coating composition according to one of Claims 10 or 11, **characterized in that** both isocyanate groups are attached via -CR¹R²-CH₂-CH₂- to positions 1 and 3 of a benzene ring.

13. The two-component coating composition according to one of Claims 1 to 12, **characterized in that** component (I) comprises from 10 to 90% by weight, based on the overall amount of the crosslinkers in component (I), of fully blocked isocyanates Ia), fully blocked oligomers Ib), other polyisocyanates, partially blocked and/or fully blocked other polyisocyanates, oligomers, of these other polyisocyanates; partially and/or fully blocked oligomers of these other polyisocyanates, isocyanate-functional polyurethane prepolymers and/or partially and/or fully blocked isocyanate-functional polyurethane prepolymers; tris(alkoxycarbonylamino)triazines, melamine resins, amino resins, carbodiimides, aziridines; epoxides and/or siloxanes.

14. The two-component coating composition according to one of Claims 1 to 13, **characterized in that** component (II) comprises at least one binder having functional groups which react with isocyanate groups.

15. The two-component coating composition according to Claim 14, **characterized in that** binders used are polyacrylates, polyesters, polyurethanes, acrylated polyurethanes and/or acrylated polyesters.

16. The two-component coating composition according to Claim 14 or 15, **characterized in that** functional groups used are hydroxyl groups.

17. The two-component coating composition according to one of Claims 1 to 16, **characterized in that** the amounts of components (I) and (II) are chosen in their proportions to one another such that the ratio of functional groups which react with isocyanate groups to NCO is from 1.0:0.5 to 1.0:2.0.

18. Use of the two-component coating composition according to one of Claims 1 to 17 in a process for coating a substrate, **characterized in that** component (I) and component (II) are mixed prior to application to form the coating composition, this composition is applied, and the components are baked together.

19. Use of a two-component coating composition according to one of Claims 1 to 17 for producing a top coat or a clear coat.

## Revendications

1. Composition de revêtement bicomposant comprenant
(I) un composant renfermant au moins un isocyanate en tant qu'agent de réticulation,
(II) un composant comprenant au moins un liant ayant des groupes fonctionnels qui réagissent avec des groupes isocyanate,
**caractérisée en ce que**
le composant (I) comprend
Ia) au moins un isocyanate renfermant au moins un motif structural diisocyanate, qui
i) présente une structure cyclique insaturée ou aromatique ou non aromatique ayant de 5 à 10 atomes cycliques et
ii) renferme deux groupes isocyanate liés à la structure cyclique,
où
iii) dans le cas d'une structure cyclique non aromatique et
α) où les deux groupes isocyanate sont liés à la structure cyclique par l'intermédiaire d'un alkyle en C₁-C₉ linéaire et/ou d'un éther-alkyle en C₂-C₁₀ linéaire, ou
β) où un groupe isocyanate est lié directement à la structure cyclique et l'autre groupe isocyanate est lié à la structure cyclique par l'intermédiaire d'un éther-alkyle en C₂-C₁₀ linéaire,
et
iv) dans le cas d'une structure cyclique insaturée ou aromatique, au moins l'un des deux groupes isocyanate est lié à la structure cyclique par l'intermédiaire d'un alkyle en C₂-C₉ linéaire et/ou d'un éther-alkyle en C₂-C₁₀ linéaire, lesquels deux radicaux ne renferment aucun atome d'hydrogène benzylique ;
et/ou
Ib) au moins un oligomère de l'isocyanate Ia) ayant de 2 à 10 motifs isocyanate
et/ou
Ic) au moins un isocyanate Ia) et/ou oligomère Ib) partiellement bloqué.

2. Composition de revêtement bicomposant selon la revendication 1, **caractérisée en ce que**
(iv) dans le cas d'une structure cyclique aromatique, les deux groupes isocyanate sont liés à la structure cyclique par l'intermédiaire d'un alkyle en C₂-C₉ linéaire et/ou d'un éther-alkyle en C₂-C₁₀ linéaire, lesquels deux radicaux ne renferment aucun atome d'hydrogène benzylique.

3. Composition de revêtement bicomposant selon la revendication 1 ou 2, **caractérisée en ce que** la structure cyclique renferme des atomes d'azote, d'oxygène et/ou de silicium.

4. Composition de revêtement bicomposant selon la revendication 3, **caractérisée en ce que** l'on utilise des noyaux silacyclopentane, silacyclohexane, oxolane, oxane, dioxane, morpholine, pyrrolidine, imidazoline, pyrazolidine, pipéridine, chinuclidine, pyrrole, imidazole, pyrazole, pyridine, pyrimidine, pyrazine, pyridazine ou triazine.

5. Composition de revêtement bicomposant selon l'une quelconque des revendications 1 à 4, **caractérisée en ce que** la structure cyclique est un squelette terpénique bicyclique, la décaline, l'adamantane ou la chinuclidine.

6. Composition de revêtement bicomposant selon la revendication 5, **caractérisée en ce que** le squelette terpénique est un squelette de carane, de norcarane, de pinane, de camphane ou norbornane.

7. Composition de revêtement bicomposant selon la revendication 1 ou 2, **caractérisée en ce que** la structure cyclique est constituée de six atomes de carbone.

8. Composition de revêtement bicomposant selon l'une quelconque des revendications 1 à 7, **caractérisée en ce que** l'on utilise, en tant qu'alkyles en C₁-C₉ linéaires, des radicaux méthylène ou éthylène ainsi que tri-, tétra-, penta-, hexa-, hepta-, octa- ou nonaméthylène.

9. Composition de revêtement bicomposant selon la revendication 7 ou 8, **caractérisée en ce que** la structure cyclique est un noyau de cyclohexane où les deux groupes isocyanate sont liés aux positions 1 et 3 du noyau de cyclohexane par l'intermédiaire de radicaux méthylène ou où un groupe isocyanate est lié par l'intermédiaire d'un alkyle en C₃-C₉ à la position 1 et un groupe isocyanate est lié directement à la position 2 du noyau de cyclohexane.

10. Composition de revêtement bicomposant selon la revendication 4 ou 7, **caractérisée en ce que** les atomes d'hydrogène benzyliques des alkyles en C₂-C₉ sont substitués par des radicaux R¹ et R² représentant un alkyle en C₁-C₁₀, un aryle ou un halogène, de préférence un méthyle.

11. Composition de revêtement bicomposant selon la revendication 10, **caractérisée en ce que** l'on utilise, en tant qu'alkyle en C₂-C₉ ayant des radicaux R¹ et R², -CR¹R²-(CH₂)ₙ-, où n vaut de 1 à 8.

12. Composition de revêtement bicomposant selon l'une quelconque des revendications 10 ou 11, **caractérisée en ce que** les deux groupes isocyanate sont liés aux positions 1 et 3 d'un noyau benzénique par l'intermédiaire de -CR¹R²-CH₂-CH₂-.

13. Composition de revêtement bicomposant selon l'une quelconque des revendications 1 à 12, **caractérisée en ce que** le composant (I) comprend de 10 à 90 pour cent en poids, par rapport à la quantité totale des agents de réticulation dans le composant (I), d'isocyanates Ia) totalement bloqués ; d'oligomères Ib) totalement bloqués , d'autres polyisocyanates, d'autres polyisocyanates partiellement bloqués et/ou totalement bloqués ; d'oligomères de ces autres polyisocyanates ; d'oligomères partiellement et/ou totalement bloqués de ces autres polyisocyanates ; de prépolymères de polyuréthannes renfermant des groupes isocyanate et/ou de prépolymères de polyuréthannes partiellement et/ou totalement bloqués renfermant des groupes isocyanate ; de tris(alcoxycarbonylamino)triazines ; de résines mélaminiques ; de résines aminoplastes ; de carbodiimides ; d'aziridines ; d'époxydes et/ou de siloxanes.

14. Composition de revêtement bicomposant selon l'une quelconque des revendications 1 à 13, **caractérisée en ce que** le composant (II) comprend au moins un liant ayant des groupes fonctionnels qui réagissent avec des groupes isocyanate.

15. Composition de revêtement bicomposant selon la revendication 14, **caractérisée en ce que** l'on utilise, en tant que liants, des polyacrylates, des polyesters, des polyuréthannes, des polyuréthannes acrylés et/ou des polyesters acrylés.

16. Composition de revêtement bicomposant selon la revendication 14 ou 15, **caractérisée en ce que** l'on utilise des groupes hydroxy en tant que groupes fonctionnels.

17. Composition de revêtement bicomposant selon l'une quelconque des revendications 1 à 16, **caractérisée en ce que** les quantités des composants (I) et (II) sont choisies en proportions l'une par rapport à l'autre telles que le rapport "groupes fonctionnels qui réagissent avec des groupes isocyanate : NCO" soit de 1,0:0,5 à 1,0:2,0.

18. Utilisation de la composition de revêtement bicomposant selon l'une quelconque des revendications 1 à 17 dans un procédé de revêtement d'un substrat, **caractérisée en ce que** le composant (I) et le composant (II) sont mélangés, avant l'application, pour former la composition de revêtement, appliqués et cuits conjointement.

19. Utilisation d'une composition de revêtement bicomposant selon l'une quelconque des revendications 1 à 17, pour la production d'une couche de finition ou d'une couche transparente.
